# EUROPÄISCHE PATENTANMELDUNG

(11) **EP 3 594 460 A1**
(43) Veröffentlichungstag der Anmeldung: **15.01.2020**
(21) Anmeldenummer: 18183389.8
(22) Anmeldetag: 13.07.2018
(51) Int. Cl.: F01K 25/10

(54) **KRAFTWERKSANLAGE MIT ERDGASREGASIFIZIERUNG**

(71) Anmelder: Siemens Aktiengesellschaft, 80333 München (DE)
(72) Erfinder: Graeber, Carsten, 91056 Erlangen (DE); Juretzek, Uwe, 91058 Erlangen (DE)

(57) **Zusammenfassung**

Die Erfindung betrifft Kraftwerksanlage (1) mit einer Gasturbine (2), die einen Verdichter (3), eine Brennkammer (4) und eine Turbine (5) umfasst, ferner mit einer Erdgasleitung (6) für den Transport von flüssigem und gasförmigem Erdgas, einem in die Erdgasleitung (6) geschalteten Erdgasverdichter (7) zur Erhöhung eines Flüssigerdgas-Drucks und einem ebenfalls in die Erdgasleitung (6) geschalteten Expander (8), weiter umfassend und zwischen Erdgasverdichter (7) und Expander (8) geschaltet einen ersten Wärmeübertrager (9) für die Verdampfung flüssigen Erdgases und einen zweiten Wärmeübertrager (10) für die weitere Erwärmung des regasifizierten Erdgases. Die Erfindung betrifft ferner ein Verfahren zum Betreiben einer solchen Kraftwerksanlage (1).

## Beschreibung

Die Erfindung betrifft eine Kraftwerksanlage sowie ein Verfahren zu deren Betrieb. Dabei geht es insbesondere um die energetisch und wirtschaftlich optimale Verdampfung von flüssigem Erdgas bei einer direkten Kopplung an eine Gas- und Dampfturbinenanlage oder an ein Gaskraftwerk.

Üblicherweise wird flüssiges Erdgas (LNG = liquid natural gas (T=-162°C)) mit Umgebungswärme (Luft / Meerwasser) oder chemischer Wärme verdampft. Alternativ wurden Konzepte entwickelt, die über kaskadierende Organic-Rankine-Kreisläufe eine energetische Nutzung der Tieftemperaturkälte zum Ziel hatten.

Aufgabe der Erfindung ist es, eine Kraftwerksanlage bereitzustellen, die eine verbesserte Leistung bzw. einen verbesserten Wirkungsgrad ermöglicht und die zugleich möglichst einfach und kostengünstig herzustellen ist. Eine weitere Aufgabe der Erfindung ist es, ein entsprechendes Verfahren zum Betrieb einer solchen Kraftwerksanlage anzugeben.

Die Erfindung löst die auf eine Kraftwerksanlage gerichtete Aufgabe, indem sie eine Kraftwerksanlage vorschlägt, mit einer Gasturbine, die einen Verdichter, eine Brennkammer und eine Turbine umfasst, mit einer Erdgasleitung für den Transport von flüssigem und gasförmigem Erdgas, einem in die Erdgasleitung geschalteten Verdichter zur Erhöhung eines Flüssigerdgas-Drucks und einem ebenfalls in die Erdgasleitung geschalteten Expander, weiter umfassend und zwischen Verdichter und Expander geschaltet einen ersten Wärmeübertrager für die Verdampfung flüssigen Erdgases und einen zweiten Wärmeübertrager für die weitere Erwärmung des regasifizierten Erdgases.

Durch Kopplung der Flüssigerdgas-Verdampfung an einen nachgeschalten Expander wird es möglich, eine maximale Nutzung der Tieftemperaturkälte zur Stromerzeugung mit höchsten Wirkungsgraden zu erreichen.

Besonders vorteilhaft für den Wirkungsgrad der Kraftwerksanlage ist es, wenn ein dritter Wärmeübertrager in der Erdgasleitung dem Expander nachgeschaltet ist. Es besteht prinzipiell zwar auch die Möglichkeit, mit dem zweiten Wärmeübertrager das Erdgas soweit aufzuheizen, dass es auch nach der Expansion entsprechend vorgewärmt der Verbrennung zugeführt werden kann, so dass aus Kostengründen auf den Einsatz eines dritten Wärmeübertragers verzichtet werden kann. Die technisch bessere Variante ist aber diejenige mit einer der Expansion nachgeschalteten weiteren Erwärmung durch den dritten Wärmeübertrager.

In einer vorteilhaften Ausführungsform der Erfindung ist der erste Wärmeübertrager über einen Wärmeträgermedium-Kreislauf in eine Ansaugluftleitung der Gasturbine geschaltet.

In einer weiteren vorteilhaften Ausführungsform ist der erste Wärmeübertrager über einen Wärmeträgermedium-Kreislauf in ein Kühlsystem der Kraftwerksanlage geschaltet. Dabei kann die Wärme aus der Gasturbinen-Ansaugluft bzw. aus dem Kühlsystem parallel oder in Reihe geschaltet verwendet werden.

Dabei ist es im Hinblick auf Einfrieren und Wärmeleitfähigkeit des Wärmeträgers zweckmäßig, wenn der Wärmeträgermedium-Kreislauf ein Wasser-Glykol-Kreislauf ist.

Vorteilhafterweise umfasst die Kraftwerksanlage weiter einen Abhitzedampferzeuger, wobei der zweite Wärmeübertrager mit einem Kondensatvorwärmer, d.h. mit der letzten Heizfläche im Abhitzedampferzeuger gekoppelt ist. Dieser zweite Wärmeübertrager erwärmt das bereits verdampfte Erdgas weiter auf ca. 130 - 170°C.

Dabei kann es zweckmäßig sein, wenn ein Heißkondensatentnahmepunkt für den zweiten Wärmeübertrager in Strömungsrichtung des Speisewassers hinter einer Hochdruck-Speisewasserpumpe bei entsprechend hohem Druck liegt, um einen aus Sicherheitsaspekten unerwünschten Übertritt des Erdgases in den Wasser-Dampf-Kreislauf im Fall einer Leckage zu verhindern.

Alternativ ist es vorteilhaft, wenn ein Heißkondensatentnahmepunkt für den zweiten Wärmeübertrager in Strömungsrichtung des Kondensats hinter einer Kondensatrezirkulationspumpe liegt und der zweite Wärmeübertrager ein doppelwandiger Sicherheitswärmeübertrager ist, als Maßnahme zur Verhinderung eines unerwünschten Erdgasübertritts. Diese alternative Anordnung des Heißkondensatentnahmepunkts hat Vorteile im Wirkungsgrad.

Bezüglich des dritten Wärmeübertragers ist es vorteilhaft, wenn er mit einem Speisewassersystem des Abhitzedampferzeugers gekoppelt ist. Nachdem das vorgewärmte Erdgas über den Expander auf das für den Gasturbinen-Betrieb notwendige Gasdruckniveau unter Leistungsabgabe entspannt wurde, stellt sich eine Gastemperatur von ca. 40 - 70°C ein. Um aus Performancegründen die maximal zulässige Gasturbinen-Brennstofftemperatur zu erreichen, wird der dritte Wärmeübertrager zwischen Expander und Gasturbine in der Erdgasleitung angeordnet. Dieser dritte Wärmeübertrager bezieht seine Wärme aus dem Mitteldruck- oder Hochdruck-Speisewasser des Abhitzedampferzeugers.

Dieser Ansatz kann auch bei Gasturbinenkraftwerken zum Einsatz kommen, auch wenn in einer solchen Kraftwerkskonfiguration kein Abhitzedampferzeuger vorgesehen ist. Die notwendigen Wärmeübertragerflächen zur Integration von Abgaswärme in den zweiten und dritten Wärmeübertrager können vorteilhafterweise z.B. in einem internen Kaminbypass der Gasturbine angeordnet werden, bei dem heißes Abgas über einen separaten Kanal mit Heizflächen geführt und abgekühlt und dem Hauptabgasmassenstrom wieder zugemischt wird.

Die auf ein Verfahren gerichtete Aufgabe wird gelöst durch ein Verfahren zum Betreiben einer Kraftwerksanlage mit Flüssigerdgas-Verdampfung, bei dem flüssiges Erdgas auf mindestens 150 bar gebracht wird, wobei Wärme aus einer Gasturbinenansaugluft und/oder aus einem Kühlsystem der Kraftwerksanlage verwendet wird, um flüssiges Erdgas zu vergasen.

Vorteilhafterweise wird dabei in einem weiteren Schritt Erdgas im Wärmetausch mit Heißkondensat weiter erwärmt.

Dabei ist es zweckmäßig, wenn das weiter erwärmte Erdgas über einen Expander auf ein für einen Gasturbinen-Betrieb notwendiges Gasdruckniveau unter Leistungsabgabe entspannt wird.

Weiter ist es vorteilhaft, wenn das entspannte Erdgas im Wärmetausch mit Speisewasser weiter erwärmt wird.

Bei Kraftwerkanlagen mit Gasturbine aber ohne Wasser-Dampf-Kreislauf ist es vorteilhaft, wenn heißes Abgas über einen Kanal mit Heizflächen für eine Verdampfung und Erwärmung von Flüssigerdgas geführt wird und abgekühlt dem Hauptabgasmassenstrom wieder zugemischt wird.

Durch die Kopplung der Wiederverdampfung an einen nachgeschalteten Expander und eine damit verbundene optimale Kälte-/Wärmeintegration mit dem GuD-Prozess über mehrere Wärmeübertrager lässt sich eine deutlich verbesserte GuD-Performance sowohl hinsichtlich der GuD-Leistung (bis ca. +10%) wie auch bezüglich des GuD-Wirkungsgrades (ca. +0,3 - +0,5%-Pkt.) erzielen. Das Konzept setzt am LNG-Tank mit anschließender Druckerhöhung auf ca. 150 bar an. In einem nachgeschalteten Wärmeübertrager erfolgt die Verdampfung des LNGs bei hohem Druck bis auf eine Temperatur von ca. 5°C (auch Temperaturen leicht unter 0°C sind zulässig, solange genügend Heizwasser im zweiten Wärmeübertrager zur Verfügung gestellt wird).

Der Vorteil bei diesem Konzept liegt neben der offensichtlichen Verbesserung der Performance vor allem im vergleichsweise kostengünstigen Erreichen dieser Performanceverbesserung, da alle Komponenten mit Ausnahme des Expanders (inkl. Generator und Hilfssysteme) und des zweiten Wärmeübertragers in entsprechenden LNG-befeuerten Kraftwerken zum Einsatz kommen müssen (erster Wärmeübertrager und Flüssiggaspumpe) bzw. sollten (dritter Wärmeübertrager).

Die Erfindung wird beispielhaft anhand der Zeichnungen näher erläutert. Es zeigen schematisch und nicht maßstäblich:
- Figur 1: eine Gas- und Dampfturbinenanlage nach der Erfindung und
- Figur 2: eine Gasturbinenanlage nach der Erfindung.

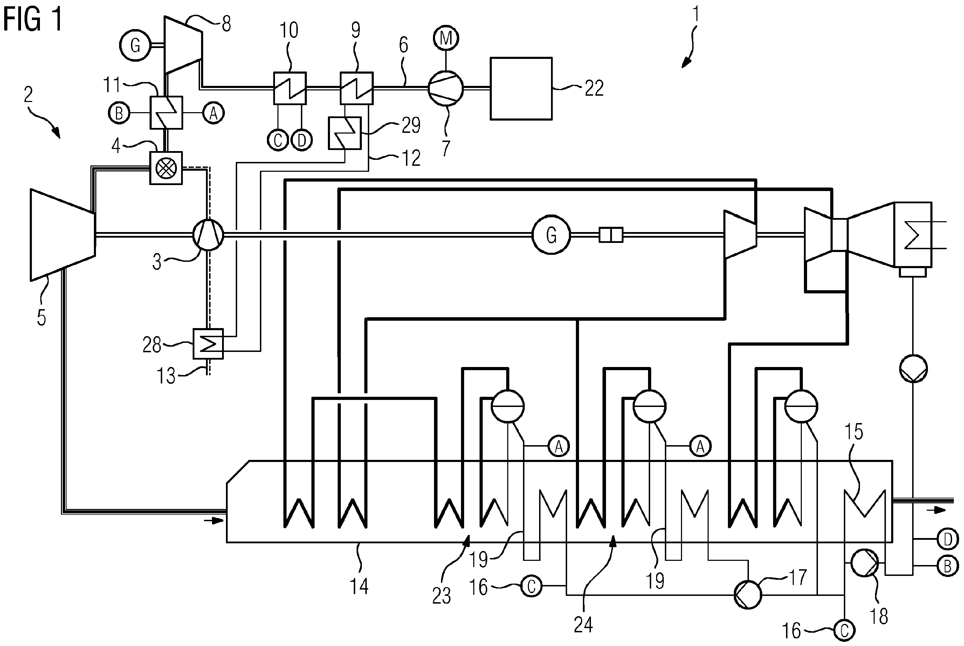

Die Figur 1 zeigt schematisch und beispielhaft eine als Gas- und Dampfturbinenanlage ausgeführte Kraftwerksanlage 1 nach der Erfindung.

Die Kraftwerksanlage 1 umfasst eine Gasturbine 2 mit einem Verdichter 3, einer Brennkammer 4 und einer Turbine 5. Figur 1 zeigt eine von einem Erdgastank 22 abzweigende Erdgasleitung 6 für den Transport von flüssigem und gasförmigem Erdgas, in die ein Erdgasverdichter 7 zur Erhöhung eines Flüssigerdgas-Drucks und ein Expander 8 geschaltet sind.

Zwischen Erdgasverdichter 7 und Expander 8 sind ein erster Wärmeübertrager 9 für die Verdampfung flüssigen Erdgases und ein zweiter Wärmeübertrager 10 für die weitere Erwärmung des regasifizierten Erdgases geschaltet. Hinter dem Expander 8 ist ferner ein dritter Wärmeübertrager 11 in der Erdgasleitung 6 angeordnet.

Der erste Wärmeübertrager 9 ist über einen Wärmeträgermedium-Kreislauf 12 und einen vierten Wärmeübertrager 28 in eine Ansaugluftleitung 13 der Gasturbine 2 und über einen fünften Wärmeübertrager 29 in ein Kühlsystem der Kraftwerksanlage 1 geschaltet. Im Ausführungsbeispiel der Figur 1 sind vierter und fünfter Wärmeübertrager 28,29 in Reihe angeordnet. Eine parallele Anordnung ist aber auch denkbar.

Der Wärmeträgermedium-Kreislauf 12 ist typischerweise ein Wasser-Glykol-Kreislauf.

Ist die Kraftwerksanlage 1 eine Gas- und Dampfturbinenanlage, wie in der Figur 1 gezeigt, dann umfasst sie weiter einen Abhitzedampferzeuger 14, wobei der zweite Wärmeübertrager 10 mit einem Kondensatvorwärmer 15 im Abhitzedampferzeuger 14 gekoppelt ist. Figur 1 zeigt beide Optionen der Heißkondensatentnahme für den zweiten Wärmeübertrager 10. Im ersten Fall liegt ein Heißkondensatentnahmepunkt 16 hinter einer Hochdruck-Speisewasserpumpe 17. Im zweiten Fall liegt der Heißkondensatentnahmepunkt 16 hinter einer Kondensatrezirkulationspumpe 18. In diesem Fall sollte der zweite Wärmeübertrager 10 als ein doppelwandiger Sicherheitswärmeübertrager ausgeführt sein.

Figur 1 zeigt schließlich, dass der dritte Wärmeübertrager 11 mit einem Speisewassersystem 19 des Abhitzedampferzeugers 14 gekoppelt ist.

Es besteht die Möglichkeit, Speisewasser aus dem Hochdruckteil 23 oder dem Mitteldruckteil 24 für die Erwärmung des Erdgases über den dritten Wärmeübertrager 11 zu entnehmen. Die Figur 1 zeigt beide Varianten.

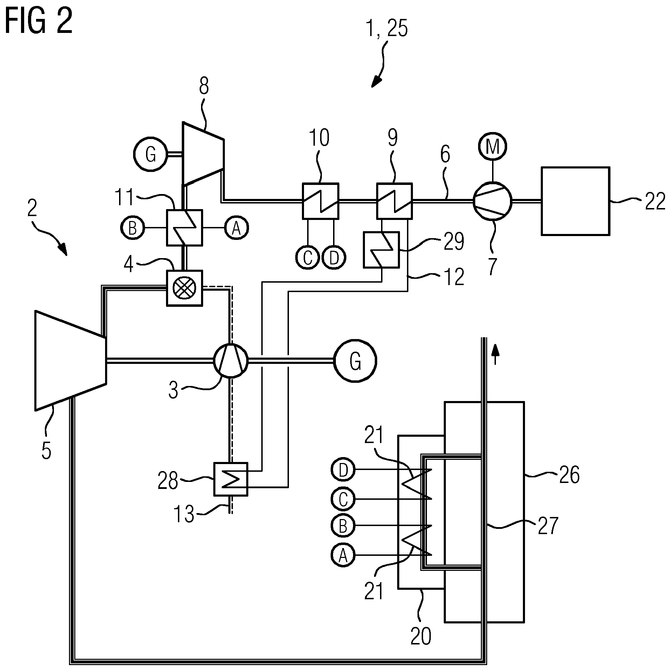

Das Konzept der Erfindung ist auch auf einen anderen Kraftwerkstyp übertragbar. Figur 2 zeigt eine Gasturbinenanlage 25 mit Abgaskamin 26 sowie einem Kamin-Bypass 20 am Abgaskamin 26. Die Anordnung der Komponenten für die Regasifizierung des Erdgases ist gegenüber der Anlage der Figur 1 unverändert. Die Wärme für die zweiten und dritten Wärmeübertrager 10,11 wird hier über entsprechende Wärmeübertragerflächen 21 im Kamin-Bypass 20 des Abgaskamins 26 aus dem Gasturbinenabgas gewonnen. Im Betrieb wird ein Teil des Abgases über den Kamin-Bypass 20 geleitet und nach Abgabe der Wärme an die entsprechenden Wärmeübertragerflächen 21 wieder dem Hauptabgasstrom 27 zugemischt.

## Patentansprüche

1. Kraftwerksanlage (1) mit einer Gasturbine (2), die einen Verdichter (3), eine Brennkammer (4) und eine Turbine (5) umfasst, ferner mit einer Erdgasleitung (6) für den Transport von flüssigem und gasförmigem Erdgas, einem in die Erdgasleitung (6) geschalteten Erdgasverdichter (7) zur Erhöhung eines Flüssigerdgas-Drucks und einem ebenfalls in die Erdgasleitung (6) geschalteten Expander (8), weiter umfassend und zwischen Erdgasverdichter (7) und Expander (8) geschaltet einen ersten Wärmeübertrager (9) für die Verdampfung flüssigen Erdgases und einen zweiten Wärmeübertrager (10) für die weitere Erwärmung des regasifizierten Erdgases.

2. Kraftwerksanlage nach Anspruch 1, weiter umfassend einen in der Erdgasleitung (6) dem Expander (8) nachgeschalteten dritten Wärmeübertrager (11).

3. Kraftwerksanlage (1) nach einem der Ansprüche 1 oder 2, wobei der erste Wärmeübertrager (9) über einen Wärmeträgermedium-Kreislauf (12) in eine Ansaugluftleitung (13) der Gasturbine (2) geschaltet ist.

4. Kraftwerksanlage (1) nach einem der vorhergehenden Ansprüche, wobei der erste Wärmeübertrager (9) über einen Wärmeträgermedium-Kreislauf (12) in ein Kühlsystem der Kraftwerksanlage (1) geschaltet ist.

5. Kraftwerksanlage (1) nach einem der Ansprüche 3 oder 4, wobei der Wärmeträgermedium-Kreislauf (12) ein Wasser-Glykol-Kreislauf ist.

6. Kraftwerksanlage (1) nach einem der vorhergehenden Ansprüche, weiter umfassend einen Abhitzedampferzeuger (14), wobei der zweite Wärmeübertrager (10) mit einem Kondensatvorwärmer (15) im Abhitzedampferzeuger (14) gekoppelt ist.

7. Kraftwerksanlage (1) nach Anspruch 6, wobei ein Heißkondensatentnahmepunkt (16) hinter einer Hochdruck-Speisewasserpumpe (17) liegt.

8. Kraftwerksanlage (1) nach Anspruch 6, wobei ein Heißkondensatentnahmepunkt (16) hinter einer Kondensatrezirkulationspumpe (18) liegt und der zweite Wärmeübertrager (10) ein doppelwandiger Sicherheitswärmeübertrager ist.

9. Kraftwerksanlage (1) nach den Ansprüchen 2 und 6, wobei der dritte Wärmeübertrager (11) mit einem Speisewassersystem (19) des Abhitzedampferzeugers (14) gekoppelt ist.

10. Kraftwerksanlage (1) nach einem der Ansprüche 1 bis 5, weiter umfassend einen Kamin-Bypass (20) der Gasturbine (2), der Wärmeübertragerflächen (21) zur Integration in die zweiten und dritten Wärmeübertrager (10,11) umfasst.

11. Verfahren zum Betreiben einer Kraftwerksanlage (1) mit Flüssigerdgas-Verdampfung, bei dem flüssiges Erdgas auf mindestens 150 bar gebracht wird, **dadurch gekennzeichnet, dass** Wärme aus einer Gasturbinenansaugluft und / oder aus einem Kühlsystem der Kraftwerksanlage (1) verwendet wird, um flüssiges Erdgas zu vergasen.

12. Verfahren nach Anspruch 11, wobei in einem weiteren Schritt Erdgas im Wärmetausch mit Heißkondensat weiter erwärmt wird.

13. Verfahren nach Anspruch 12, wobei das weiter erwärmte Erdgas über einen Expander (8) auf ein für einen Gasturbinen-Betrieb notwendiges Gasdruckniveau unter Leistungsabgabe entspannt wird.

14. Verfahren nach Anspruch 13, wobei das entspannte Erdgas im Wärmetausch mit Speisewasser weiter erwärmt wird.

15. Verfahren nach Anspruch 11, wobei heißes Abgas durch einen Kamin-Bypass (20) mit Wärmeübertragerflächen (21) für eine Verdampfung und Erwärmung von Flüssigerdgas geführt wird und abgekühlt einem Hauptabgasmassenstrom wieder zugemischt wird.
